# EUROPEAN PATENT APPLICATION

(11) **EP 1 833 226 A1**
(43) Date of publication of application: **12.09.2007**
(21) Application number: 07101897.2
(22) Date of filing: 07.02.2007
(51) Int. Cl.: H04L 29/06

(54) **A method for implementing EAP authentication relay in a wireless access system**

(30) Priority: 08.03.2006 CN 200610034248
(71) Applicant: Huawei Technologies Co., Ltd., Shenzhen, Guangdong Province 518129 (CN)
(72) Inventor: Li, Jun, 518129, Guangdong Province (CN); Mei, Liubo, 518129, Guangdong Province (CN)
(74) Representative: Viering, Jentschura & Partner

(57) **Abstract**

The present invention is related to a method for implementing EAP authentication relay in a wireless access system. During the EAP authentication process, an authentication protocol of the EAP over a wireless medium runs between the Supplicant and the Authentication Relay, the EAPoL protocol runs between the Authentication Relay and the Authenticator, and the Authentication Relay performs the transformation between the authentication protocol of EAP over wireless medium and EAPoL. The method in this present invention may facilitate the interoperability between the Authentication Relays and the Supplicants from various vendors, as well as make better use of the current Ethernet access and aggregation network. The present invention can work under the current framework of a fixed access network without much modification.

## Description

### CROSS-REFERENCES TO RELATED APPLICATIONS

The present application claims priority to Chinese Patent Application No. 200610034248.5, filed March 8, 2006, commonly assigned, incorporated by reference herein for all purposes.

### BACKGROUND OF THE INVENTION

The present invention is related to a method for implementing authentication in the broadband access system, especially related to the method of implementing EAP (Extensible Authentication Protocol) authentication relay in a wireless access system.

In a broadband access system, it is a prerequisite that users are ensured legal access and a secure communication environment. Generally a user needs to pass an AAA (Authentication Authorization Accounting) process of validity verification when accessing the network. According to a previously signed agreement, it will be determined whether or not the user is authorized to access the network, as well as what services the user may enjoy, while billing of the user will also be triggered. These are the said AAA process. To ensure a secure communication environment for the user, the user's data flow must be thoroughly encrypted and protected. This requires that shared keys to be built between the two communication entities. In order to guarantee the security of the key distribution, the key distribution process is generally associated with the user's AAA process, and key distribution is accomplished after user authentication and authorization. In a wireless access network where the air interface is wide open, it is extremely crucial to consider the matter of creating a secure communication environment.

In the AAA framework, there is currently a trend to utilize EAP as a carrier protocol of the authentication mechanism. EAP protocol is highly versatile and easily expandable, and may carry various authentication mechanisms (e.g. TLS, Transport Layer Security / SIM, Subscriber Identity Module / KAK Authentication and key Agreement). At the same time, it does not limit underlying carrier mechanisms, which could be link layer paths, e.g. Ethernet, WiFi (Wireless fidelity), WiMAX (World Interoperability for Microwave Access), as well as higher-layer paths such as IP, UDP (User Datagram Protocol), RADIUS (Remote authentication Dial-In User Service).

In a wireless accessed WiMAX network, user authentication and air interface security have been carefully considered. The standard draft of NWG (Network Work Group, the Network Work Group for the Wimax Forum) has defined the use of EAP as user authentication protocol and described a rough process of authentication and key distribution. In the security sublayer of IEEE 802.16e standard definitions, it has newly added PKMv2 (Privacy Key Management), which additionally supports the terminal's identity authentication with EAP in contrast to PKMvl.

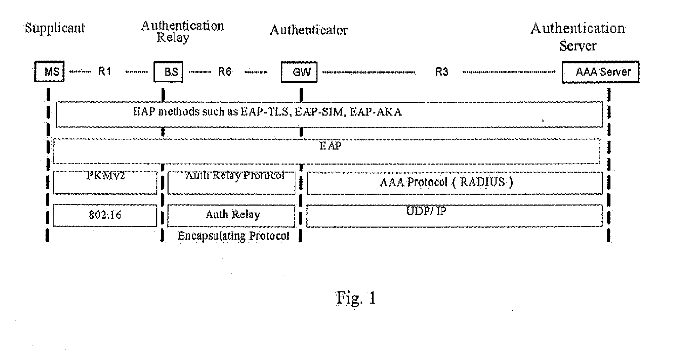

In Figure 1, which is the WiMAX authentication protocol diagram defined by NWG, 802.16e defined a standard protocol of EAP over PKM (EAPoP for short below) on the R1 reference point (air interface) between the Supplicant/MS (Mobility Station) and the Authentication Relay/BS (Base Station). However, PKM is no more than a carrier message on an air interface defined in 802.16e, and cannot be directly used on other link layers. So, NWG requires supporting an authentication relay protocol on the R6 reference point between the BS and Authenticator/Gateway, with the specified protocol and implementation left undefined. According to the current definition, the said authentication relay protocol has not been standardized yet and causes interoperability problems between the BS and GW from various vendors. On the R3 reference point between Authenticator/GW and Authentication Server, IETF defined several standard protocols of EAP over AAA (EAPoA for short), e.g. EAP over RADIUS/Diameter.

### BRIEF SUMMARY OF THE INVENTION

The embodiment of the present invention provides a method for implementing EAP authentication relay in a wireless access system in order to facilitate the interoperability between supplicants and authentication relays from various vendors.

To solve the said technical problem, the present invention provides a method including: a method for implementing EAP authentication relay in a wireless access system; during the EAP authentication process, an authentication protocol of EAP over wireless medium runs between the Supplicant and the Authentication Relay, the EAPoL protocol runs between the Authentication Relay and the Authenticator, and the Authentication Relay performs the conversion between the authentication protocol of EAP over wireless medium and EAPoL.

The said method further comprising the following steps:
A1. The Supplicant sends to the Authentication Relay authentication messages of the authentication protocol of EAP over the wireless medium;
A2. On receiving the authentication messages of the authentication protocol of EAP over wireless medium, the Authentication Relay transforms the said message to the EAPoL packet which is forwarded to the Authenticator afterwards;
A3. Upon receiving the EAPoL packets from the Authentication Relay, for the packets that need to be sent to the Authentication Relay, the Authenticator sends out with EAPoL encapsulation; on receiving EAPoA packets from the AAA Server, for the packets that need to be sent to the Authentication Relay, the Authenticator sends out after transforming them into EAPoL packets;
A4. On receiving EAPoL packets from the Authenticator, the Authentication Relay transforms the said packets into the authentication protocol messages of EAP over a wireless medium, and sends them to the Supplicant over air interface;
A5. Thereafter performing the processes of EAP authentication method negotiation and authentication method exchange, in which the Supplicant and the Authentication Relay perform conversations with the authentication protocol of EAP over wireless medium, the Authentication Relay and the Authenticator perform conversations with EAPoL messages, till the end of the EAP authentication process, thereby the Authentication Relay accomplishes the function of EAP authentication relay.

In an embodiment of the present invention, the said wireless access system is a WiMAX system, and the said authentication protocol of EAP over wireless medium is EAPoP.

The said step A1 further comprising: after the 802.16 basic air interface link is established, the Supplicant initiates the EAP authentication application to the Authentication Relay with PKM-Request message, whose packet type is EAP-Start.

The said step A2 further comprising: on receiving the said PKM-Request message, the Authenticator Relay generates EAP-Start packet of EAPoL and sends it to the Authenticator.

The said step A3 further comprising: on receiving the said EAP-Start packet of EAPoL, the Authenticator sends EAP-Request/Identity packet, the identity inquiry request, to the Authentication Relay, whilst the said EAP-Request/Identity packet is conveyed by the EAP-Packet packet of the EAPoL.

The said step A4 further comprising: on receiving the said EAP-Request/ldentity packet of EAPoL, the Authentication Relay encapsulates the EAP-Request/Identity, the identity inquiry request in the PKM-Response message, whose packet type is EAP-Transfer, and sends it to the Supplicant.

In the said process in step A5, the Supplicant and the Authentication Relay perform conversations with PKM-Request/Response message, whose packet type is EAP-Transfer, while the Authentication Relay and the Authenticator perform conversations with EAPoL EAP-Packet packet.

The benefits from the present invention include: implementing the transformation between the authentication protocol of the EAP over a wireless medium and EAPoL, that is to say, EAPoL, a standard authentication protocol, is used on the network side, thereby facilitating the interoperability of devices from various vendors, as well as making better use of the current Ethernet access and aggregation network. The present invention can work under the current framework of a fixed access network without much modification.

### BRIEF DESCRIPTION OF THE DRAWINGS

Fig. 1 is a WiMAX authentication protocol diagram defined by NWG.

Fig. 2 is a WiMAX authentication protocol diagram defined by the present invention.

Fig. 3 depicts a process of implementing protocol transformation between EAPoP and EAPoL in a WiMAX system, in accordance with the present invention.

### DETAILED DESCRIPTION OF THE INVENTION

In a broadband wired access network, the most popular link layer technology is Ethernet technology. As described in the present invention, the method for implementing EAP authentication relay in a wireless access system is aimed at a network in which the 802.3 Ethernet link mechanism is used in the network between the BS and GW. For EAP authentication over Ethernet, IEEE 802.1X has defined a standard protocol of EAP over Ethernet, a.k.a. EAP over LAN (abbreviated as EAPoL below). According to the embodiments of the present invention, the method for implementing EAP authentication relay in a wireless access system primarily comprises: during the EAP authentication process, running an authentication protocol of EAP over a wireless medium between the MS and BS, running EAPoL between BS and GW, implementing the transformation between the authentication protocol of EAP over wireless medium and EAPoL in BS. This means performing the authentication of the authentication protocol of EAP over a wireless medium over an air interface while performing EAPoL authentication on the network side, thereby the EAP authentication relay between BS and GW is accomplished.

The present invention will be described below in the context of a type of wireless access network, namely the WiMAX system. The said authentication protocol of EAP over a wireless medium is EAPoP in the WiMAX system.

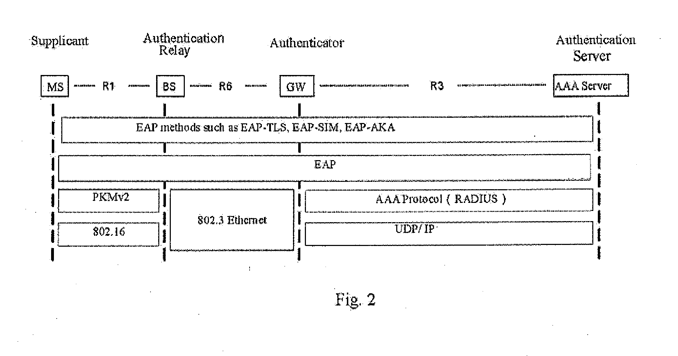

According to Fig. 2, which is a WiMAX authentication protocol diagram defined by the present invention, the R1 reference point is the WiMAX air interface, whose link layer mechanism is the link layer defined by 802.16; the R6 reference point is a wired access and aggregation network between the BS and GW, whilst specifically in the embodiment of the present invention the said network's link layer mechanism is the Ethernet link layer defined by 802.3; the R3 reference point is the core network between GW and the AAA server, where there may be several kinds of link layer mechanisms.

The said GS and GW in the embodiment of the present invention are just nomenclatures of network elements in the WiMAX forum. The embodiment of the present invention does not restrict the specific form of the devices. For example, BS may be AN (Access Node) in the DSL (Digital Subscriber Loop) Forum, and GW may be BNG (Broadband Network Gateway) in the DSL Forum.

According to an embodiment of the present invention the method for implementing EAP Authentication Relay in a WiMAX system comprises:
A1. During network entry, MS initiates EAP authentication over air interface and the said EAP packet is conveyed by 802.16 PKM messages, that is to say the MS sends to BS an authentication message of EAPoP;
A2. On receiving the said authentication message of EAPoP from the MS, the BS transforms the said message into an EAPoL packet which is forwarded to the GW thereafter; the said EAPoL packet is conveyed by Ethernet at this time;
A3. On receiving EAPoL packets from the BS, for those that need to be forwarded to the AAA Server, the GW transforms the said EAPoL packets into EAPoA packets and forwards them to the AAA Server thereafter; the said EAP packets are conveyed by AAA protocol (e.g. RADIUS or DIAMETER) at this time. For the said EAPoL packets that need to be forwarded to the BS, GW forwards them with EAPoL encapsulation. On receiving the said EAPoA packets from the AAA Server, for those that need to be forwarded to the BS, the GW transforms them into EAPoL packets and forwards thereafter, which is a standard process of EAP transformation;
A4. On receiving EAPoL packets from GW, BS transforms them into EAPoP packets which are forwarded to MS over the air interface thereafter; EAPoP packets are conveyed by 802.16 PKM messages at this time; Thus, the BS performs the protocol transformation between EAPoP and EAPoL;
A5. During the following processes of EAP authentication method negotiation and authentication exchange, the MS and BS perform conversations with the EAPoP message, while the BS and GW perform conversations with EAPoL packets, until the EAP authentication process is completed; thereby the BS accomplishes the function of EAP authentication relay.

When the BS is implementing the EAP authentication relay function, in order to ensure EAPoL packets are transferred successfully through the Ethernet access and aggregation network of R6 reference point, the forwarding path should be configured in advance on the GW. The configuration comprises: forwarding destination VLAN (Virtual Local Area Network) as well as the destination unicast MAC (Media Access Control) address. If BS is not aware of the Authenticator's MAC address beforehand, the specific multicast MAC address defined by 802.1 X is used as the EAPoL packets' destination MAC address while the BS's own MAC address is used as the source MAC address.

After successful EAP authentication with authentication and authorization to the MS, the valid MS will be authorized to access to the network. Here, according to the requirements of different EAP authentication methods, if needed, AAA Server may send a key to the valid MS, for example, MSK (Master Session Key) which is used by MS to generate other following keys, or AK (Authorization Key) which is used to encrypt the following sessions and ensure integrity.

Moreover in a WiMAX system, correlative keys need to be sent to the BS, e.g. AK. The AK Transfer Protocol defined in the NWG could send AK from the GW to the BS. However, the said protocol is not yet standardized. Thus, in order to provide the interoperability between the BS and GW from various vendors, the present invention uses EAP-Key packet defined by EAPoL to convey the WiMAX keys which need to be sent, e.g. AK. But the 802.1X standard only addresses two kinds of key types for Key Descriptor of EAP-Key: RC4 and 802.11. Therefore, the present invention expands the definition of EAP Key Descriptor Type to support the 802.16 key type, which is called the "802.16 Key Descriptor" and is used to convey keys relevant to WiMAX;

In addition, the EAPoL standard defines an explicit logoff mechanism for the MS in which the MS sends EAP-Logoff message to the network to logoff explicitly. On receiving the said message, the network will modify the corresponding authorization state and complete the user logoff process. But the embodiment of the present invention uses the BS to detect the MS's logoff and abnormal status, where the BS initiates EAP-Logoff of EAPoL and triggers user's logoff process.

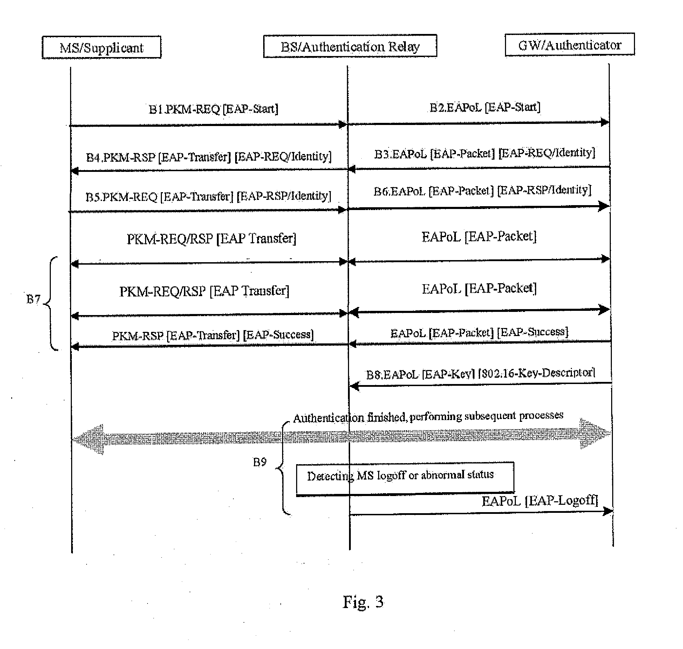

Refer to Fig. 3, the following process of implementing protocol transformation between EAPoP and EAPoL illustrates the method for implementing EAP authentication relay in a WiMAX system according to the present invention, which comprises:
B1. After the 802.16 basic air interface link is established, MS initiates a PKM-Request message, whose packet type is EAP-Start, and initiates the EAP authentication application to the BS where MS sends EAPoP authentication message to BS;
B2. On receiving the said PKM-Request message, the BS generates EAP-Start packet of EAPoL and sends it to the GW;
B3. On receiving the said EAP-Start packet of EAPoL, the GW sends the EAP-Request/Identity packet, the identity inquiry request, to the BS, whilst the said EAP-Request/Identity packet is conveyed by EAP-Packet packet of EAPoL;
B4. On receiving the said EAP-Request/Identity packet of EAPoL, the BS encapsulates the EAP-Request/Identity, the identity inquiry request in the PKM-Response message, whose packet type is EAP-Transfer, and sends it to the MS;
B5. The MS uses a PKM-Request message, whose packet type is EAP-Transfer, to send a EAP-Response/Identity response message to the BS;
B6. The BS encapsulates the said EAP-Response/Identity in the EAP-Packet of EAPoL and forwards to the GW thereafter;
B7. During the following EAP authentication method negotiation and authentication exchange processes, the MS and BS perform conversations with the PKM-Request/Response message, whose packet type is EAP-Transfer; while the BS and GW perform conversations with EAPoL EAP-Packets, till the end of the EAP authentication process;
B8. In a successful EAP authentication process, if needed, the AAA Server may send a key to the valid MS, e.g. AK. The present invention uses EAP-Key packets defined by EAPoL to convey the WiMAX keys which need to be sent, whilst the EAP Key Descriptor Type is a "802.16 Key Descriptor" and used to convey keys relevant to WiMAX;
B9. After successful authentication, if the BS detects MS's logoff or abnormal status, which may be caused by manifold reasons and detected through various methods, e.g. MS De-Registration, MS power off, air interface signal quality is unavailable, etc., the BS will initiate the EAPoL EAP-Logoff packets and instruct the GW to modify the corresponding authorization state.

In the process of protocol transformation, the BS itself is not involved in EAP processing and performs only the transformation between the 802.16 link layer and Ethernet link layer.

The embodiment of the present invention implements, in the BS, protocol transformation between EAPoP and EAPoL, that is to say, EAPoL, a standard authentication protocol, is used on the network side, so as to facilitate the interoperability of devices from various vendors, as well as make better use of the current Ethernet access and aggregation network. The present invention can work under the current framework of a fixed access network without much modification.

The above described are only the preferred embodiments of the present invention which should not be considered as a limitation to the present invention. Any modification, equivalent alteration and improvement should be encompassed in the protection scope of the present invention, provided that they fall within the spirit and scope of the present invention.

## Claims

1. A method for implementing EAP authentication relay in a wireless access system, **characterized by** comprising: during an EAP authentication process, running an authentication protocol of EAP over a wireless medium between a Supplicant and an Authentication Relay, running an authentication protocol of EAPoL between the Authentication Relay and an Authenticator, and the Authentication Relay performing a transformation between the authentication protocol of EAP over the wireless medium and the authentication protocol of EAPoL over the Ethernet.

2. The method of claim 1, wherein said method further comprises the following steps:
A1. The Supplicant sending an authentication message for the authentication protocol of EAP over the wireless medium to the Authentication Relay;
A2. Upon receiving the authentication message for the authentication protocol of EAP over the wireless medium sent by the Supplicant, the Authentication Relay transforming said message to an EAPoL packet and forwarding the EAPoL packet to the Authenticator;
A3. Upon receiving the EAPoL packet from the Authentication Relay, the Authenticator sending out a packet that needs to be sent to the Authentication Relay with an EAPoL encapsulation; upon receiving an EAPoA packet from an AAA (Authentication Authorization Accounting) Server, the Authenticator sending out the packet that need to be sent to the Authentication Relay after transforming it into an EAPoL packet;
A4. Upon receiving EAPoL packets from the Authenticator, the Authentication Relay transforming said packets into packets for the authentication protocol of EAP over the wireless medium, and sending them to the Supplicant over an air interface;
A5. Afterwards, performing processes of EAP authentication method negotiation and authentication method exchange, during which the Supplicant and the Authentication Relay performing an exchange of authentication protocol messages of EAP over the wireless medium, the Authentication Relay and the Authenticator performing an exchange with EAPoL packets, until an conclusion of an EAP authentication process, thereby the Authentication Relay accomplishing a function of an EAP authentication relay.

3. The method of claim 1 or 2, wherein said wireless access system is a WiMAX system and said authentication protocol of EAP over the wireless medium is EAPoP.

4. The method of claim 3, wherein said EAPoL packets are carried over the Ethernet.

5. The method of claim 3, wherein said EAPoP packets are carried by 802.1b PKM messages,

6. The method of claim 3, wherein said step A1 further comprises the following step: After an 802.16 basic air interface link is established, the Supplicant initiating a PKM-Request message, whose packet type is EAP-Start, and initiating an EAP authentication application with the Authentication Relay.

7. The method of claim 6, wherein said step A2 further comprises the following step: Upon receiving said PKM-Request message, the Authentication Relay generating an EAP-Start packet of EAPoL and sending it to the Authenticator.

8. The method of claim 7, wherein said step A3 further comprises the following step: Upon receiving said EAP-Start packet of EAPoL, the Authenticator sending an EAP-Request/Identity for an identity inquiry request, to the Authentication Relay, said EAP-Request/Identity packet being conveyed by an EAP-Packet packet of EAPoL.

9. The method of claim 8, wherein said step A4 further comprises the following step: Upon receiving said EAP-Request/Identity packet of EAPoL, the Authentication Relay encapsulating the EAP-Request/Identity for the identity inquiry request, in a PKM-Response message, whose message type is EAP-Transfer, and sending it to the Supplicant.

10. The method of claim 9, **characterized by** further comprising a step B5 after said step A4: The Supplicant using a PKM-Request message, whose message type is EAP-Transfer, to send an EAP-Response/Identity response packet to the Authentication Relay.

11. The method of claim 10, **characterized by** further comprising a step B6 after said step B5: The Authentication Relay encapsulating said EAP-Response/Identity in an EAP-Packet packet ofEAPoL and forwarding it to the Authenticator thereafter.

12. The method of claim 11, wherein said process of step A5 comprises using a PKM-Request/Response message, whose message type is EAP-Transfer, for performing an exchange between the Supplicant and the Authentication Relay; and using an EAPoL EAP-Packet packet for performing an exchange between the Authentication Relay and the Authenticator.

13. The method of claim 3, further comprising: When passing said EAP authentication process, the AAA Server sending a key to a valid Supplicant and Authentication Relay if needed, said key being conveyed by an EAPoL-defined EAP-Key packet, an EAP Key Descriptor Type being an 802.16 Key Descriptor.

14. The method of claim 3, further comprising: After passing said EAP authentication process, the Authentication Relay automatically initiating an EAPoL EAP-Logoff packet and instructing the Authenticator to modify a corresponding authorization state if the Authentication Relay detects a logoff or an abnormal status of the Supplicant,

15. The method of claim 3, further comprising: When said Authentication Relay is implementing an EAP authentication relay function, a pre-configured forwarding path of the Authenticator includes a forwarding destination VLAN (Virtual Local Area Network) and a destination unicast MAC (Media Access Control) address.

16. The method of claim 3, further comprising: If said Authentication Relay is not aware of the Authenticator's MAC address when implementing an EAP authentication relay function, using a specific multicast MAC address defined by 802.1X as the EAPoL packets' destination MAC address while using the Authentication Relay's own MAC address as a source MAC address.

17. The method of claim 1, wherein said Supplicant is a Mobility Station, said Authentication Relay is a Base Station, and said Authenticator is a Gateway.

18. The method of claim 1, wherein said Supplicant is a Mobility Station, said Authentication Relay is an Access Node, and said Authenticator is a Broadband Network Gateway.
